# EUROPEAN PATENT APPLICATION

(11) **EP 4 806 277 A2**
(43) Date of publication of application: **16.09.2026**
(21) Application number: 26195943.1
(22) Date of filing: 26.06.2024
(51) Int. Cl.: A23P 20/13

(54) **MACHINE FOR APPLYING A GRANULAR COATING TO FOOD**

(30) Priority: 29.06.2023 US 202363524106 P; 28.01.2024 US 202463626013 P
(62) Document number(s) of the earlier application(s) in accordance with Art. 76 EPC: 24745558.7 / 4 697 985
(71) Applicant: MP Equipment, LLC, Gainesville, GA 30504 (US)
(72) Inventor: MUNOZ, Antonio, Gainesville, 30506 (US); MITCHELL, James M., Prairie Grove, 72753 (US)
(74) Representative: Mathys & Squire

(57) **Abstract**

A machine for applying a granular food coating to a food upon a conveyor is provided. The machine includes an endless belt conveyor, and a looped elevator disposed around the first conveyor. The elevator includes a plurality of plates that are moved around the perimeter of the conveyor. The plurality of plates are disposed in a substantially vertical orientation when traveling above and below the first conveyor and the plurality of plates are in a substantially horizontal orientation when traveling in the upward direction. The plurality of plates are configured to receive granular food thereupon when traveling in the upward direction, and the food thereupon falls downwardly from the plurality of plates when the plurality of plates travel above the first conveyor, wherein a portion of the granular food falling from the plurality of plates eventually falls onto food that travels along the first conveyor below the plurality of plates.

## Description

### CROSS-REFERENCE TO RELATED APPLICATIONS

This application claims priority from United States Provisional Application No. 63/524,106, filed June 239, 2023, and from United States Provisional Application No. 63/626,013, filed January 28, 2024, the entirety of which are each fully incorporated by reference herein.

### BACKGROUND

This application relates to machines to apply breading or other granular particles for food that moves along a conveyor in an industrialized setting prior to further baking, frying, storage, or packaging of the food. Prior machines for this purpose typically use several auger mechanisms that operate in series in order to move large quantities of granular particulate matter through the machine to get the particular matter into the desired locations for coating the food. These machines require very complicated control systems and tight tolerances in order to properly operate the augers in series. This disclosure provides a machine with new mechanisms to apply granular particles to food along a conveyor that are simpler and less expensive than conventional machines.

### SUMMARY OF THE INVENTION

A first embodiment of the disclosure is provided. The embodiment includes a machine for applying a granular food coating to a food product. The machine includes a housing and a first conveyor disposed at least partially within the housing, the first conveyor extends from an inlet and through a granular food application portion and to an exit portion, the first conveyor has an endless belt that continuously moves between these portions. A second conveyor at least partially within the housing receives a food product from the exit portion of the first conveyor. One or more drums are provided that each are rotatable about their axis and are supported by the housing, the one or more drums are longitudinally movable with respect to the first conveyor and the housing such that when the one or more drums are in a first longitudinal position, food items that reach the exit portion of the first conveyor are directed into one of the one or more drums, and when the one or more drums are in a second longitudinal position the exit portion of the first conveyor is spaced a distance from the one or more drums such that food items that reach the exit portion of the first conveyor leave the first conveyor and fall to the second conveyor without interacting with the one or more drums.

Another representative embodiment of the disclosure is provided. The embodiment includes a machine for applying a granular food coating to a food product. The machine includes a housing and a first conveyor that extends from an inlet and through a granular food application portion and to an exit portion, the conveyor has an endless belt that continuously moves between these portions. A looped elevator is disposed around the granular food application portion of the first conveyor, comprising a plurality of plates that are spaceably fixed with respect to each other to move around the first conveyor, the looped elevator moves the plurality of plates in a upward direction outboard a first side of the first conveyor, then in a direction above the first conveyor from the first side of the first conveyor to an opposite second side of the first conveyor, then in a downward direction outboard of the second side of the first conveyor, and then in a direction below the first conveyor from the second side to the first side of the first conveyor. The plurality of plates are disposed in a substantially vertical orientation when traveling above and below the first conveyor and the plurality of plates are in a substantially horizontal orientation when traveling in the upward direction. The plurality of plates are configured to receive granular food thereupon when traveling in the upward direction, and the food thereupon falls downwardly from the plurality of plates when the plurality of plates travel above the first conveyor, wherein a portion of the granular food falling from the plurality of plates eventually falls onto food that travels along the first conveyor below the plurality of plates.

Advantages of the present disclosure will become more apparent to those skilled in the art from the following description of the preferred embodiments of the disclosure that have been shown and described by way of illustration. As will be realized, the disclosed subject matter is capable of other and different embodiments, and its details are capable of modification in various respects. Accordingly, the drawings and description are to be regarded as illustrative in nature and not as restrictive.

### BRIEF DESCRIPTION OF DRAWINGS

FIG. 1 is a perspective view of a machine for applying granular food coating to a food product.
FIG. 2 is another perspective view of the machine of FIG. 1 showing several access doors of the housing opened and the portions of the machine normally covered by the access doors.
FIG. 3 is a perspective cross-sectional view of the machine with the granular food application system configured to allow food to extend through a rotating drum during the granular food application process.
FIG. 4 is a side view of the cross-sectional view of FIG. 3 with the granular food application system configured to allow food to extend through a rotating drum during the granular food application process.
FIG. 5 is a perspective cross-sectional view of the machine with the granular food application system configured for food to bypass the rotating drum.
FIG. 5a is a side view of the cross-sectional view of FIG. 5 with the granular food application system configured for food to bypass the rotating drum.
FIG. 6 is a top perspective view of the machine of FIG. 1 with a top cover of the looped elevator removed.
FIG. 7 is another top perspective view of the machine of FIG. 1 with the covers of the first side portion and the top portion of the looped elevator removed.
FIG. 8 is a top view of the looped elevator of the machine of FIG. 1 with the top cover removed.
FIG. 9 is a front cross-sectional view of the machine of FIG. 1 that schematically depicts the application of granular food to food products moving along the conveyor, along with movement of granular food product between the conveyors and onto the looped elevator and through the looped elevator.
FIG. 10 is a perspective cross-section side view of the machine of FIG. 1 with some modifications thereto.
FIG. 11 is a partial side view of the modified machine of FIG. 10.
FIG. 12 is a top perspective view of an upper conveyor of the machine of FIG. 10 that receives granular food product from the looped elevator.

### DETAILED DESCRIPTION OF THE INVENTION

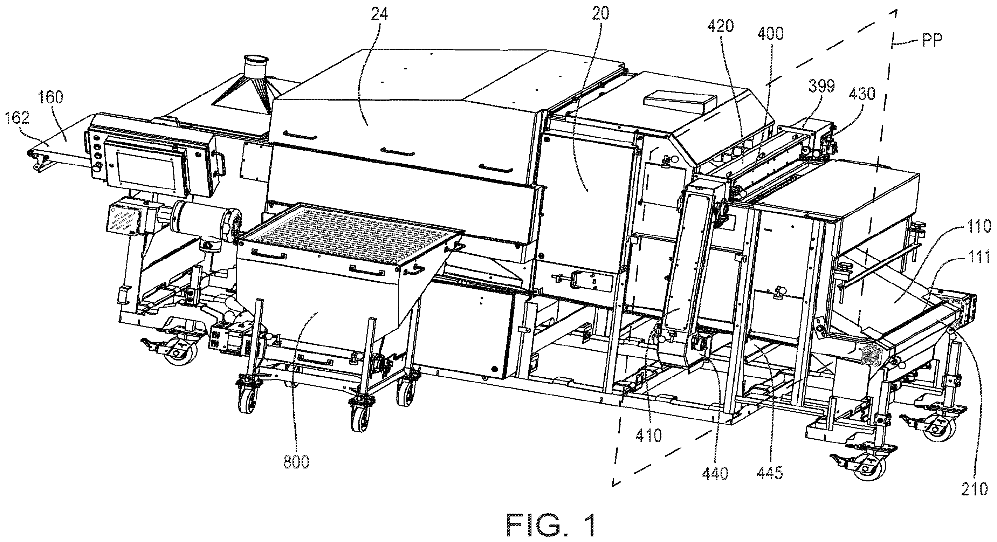

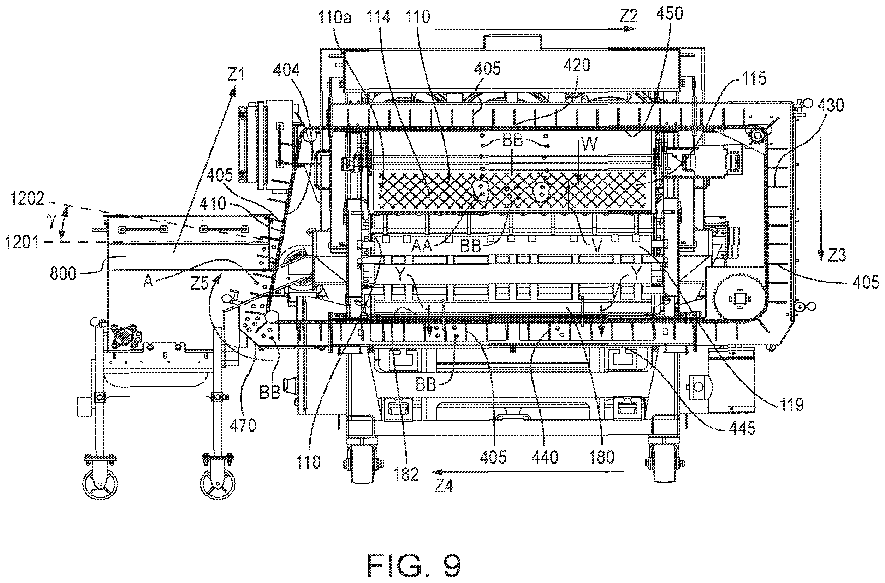

Turning to FIGs. 1-9, a machine for application of granular food portions to food products 10 is provided. The machine 10 is specifically configured to apply granular bread crumbs or flour or the like to food products, such as chicken or other proteins in a continuous fashion. The machine can be used or modified to apply other granular toppings, such as seasonings, spices, sugars, or other granular coatings to food products. For the sake of brevity, the term "granular food" can mean bread crumbs, flour, sugar, salt, sprinkles, spices or other granular and edible food products to food products. Unless specifically mentioned herein, the machine 10 can be used to apply any type of edible coating to any type of food with the food positioned a first conveyor 110, thereupon will receive a granular food coating on both sides of the food (upper side facing away from first conveyor 110 and lower side resting upon the first conveyor 110) and will be provided in a coated fashion to an outlet conveyor 160 for further processing (i.e. baking or frying, or for refrigeration or packaging). The machine is configured to continuously receive a plurality of food products AA (FIG. 9, schematic) thereon and continuously apply granular food A (FIG. 9, schematic) to the food products AA.

The machine 10 is configured to include all of the mechanism and structure needed to apply a granular food coating to both sides of the food product AA within a housing 20. The housing 20 typically encloses all of the structure for applying the granular food coating therein, such that an uncoated food product AA is deposited upon an inlet end 111 of an inlet (first) conveyor, and a fully coated food product AA reaches an outlet end 162 of the outlet conveyor 160. The inlet end 111 of the first conveyor 110 may extend out of the housing 20 and the outlet end 162 of the outlet conveyor 160 may also extend out of the housing 20.

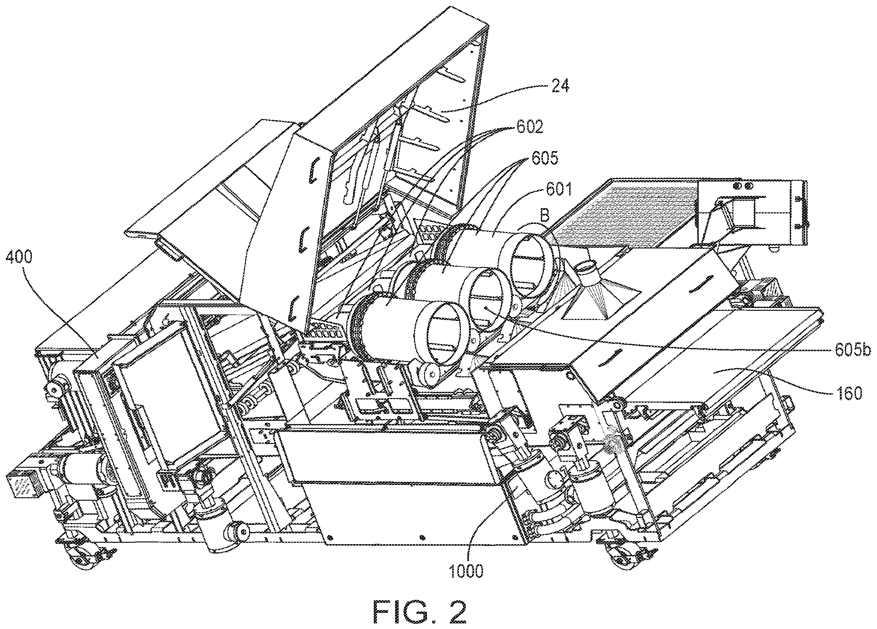

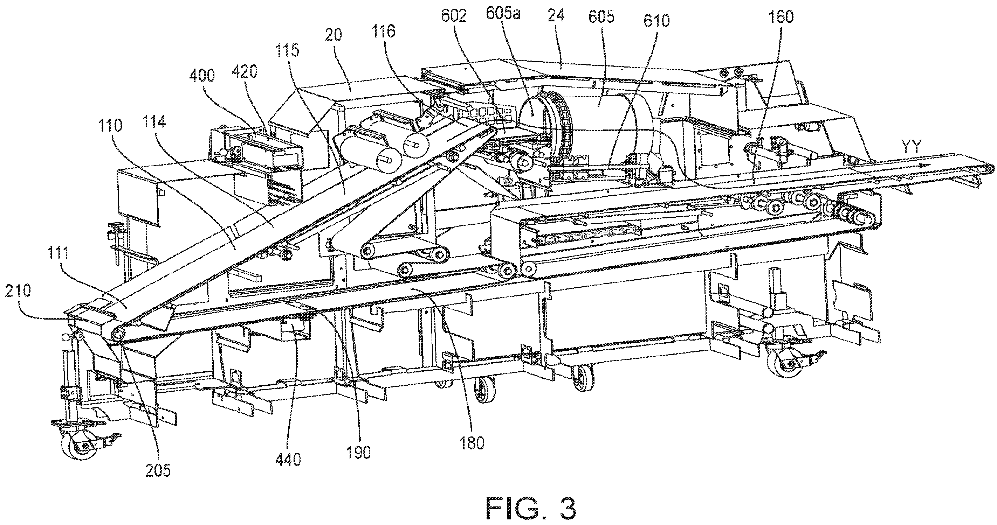

The housing 20 may include a plurality of doors that when closed enclose certain portions of the machine 10, but can be readily and conveniently opened (e.g. FIG. 2, hood 24 opened, and other doors opened) to expose portions of the machine 10 for ease of cleaning or maintenance. For example, the hood 24 encloses a top of a rotatable drum assembly 601, discussed in detail below, and when opened allows access to the plurality of drums 605 for cleaning the drums as is needed to be completed periodically to ensure that the machine 10 is compliant with regulatory periodic cleaning and sanitation specifications. With the hood 24 open, a user may easily access the inside of the one or more drums 605 to spray water (which may include cleaning fluid) via a hose into the drums for cleaning thereof. In some embodiments, the rotatable drum assembly 601 may be movable within the housing between first and second positions (FIGs. 3-4 and FIGs. 5-5a, discussed in detail below) and in some embodiments, the rotatable drum assembly 601 is positioned into one of the first or second positions to allow for easier and more ergonomic cleaning.

The machine 10 includes a granular food application system that includes, generally, a first conveyor 110 that receives food that is desired to have a granular food applied thereon, which may receive food AA thereon from an upstream conveyor (not shown), a robotic arm, or an operator. Upon placement upon the first conveyor 110, a bottom surface of the food AA will come into contact with granular food particles BB that move with the first conveyor 110, which causes granular food particles to "stick" to the bottom surface of the food, and depending upon the amount of granular food particles that are upon the first conveyor 110 also may contact and stick to one or more side surfaces of the food AA. The first conveyor 110 moves the food AA received below a granular food application system 399, which includes a looped elevator 400 with a horizontal portion 420 that extends above the first conveyor 110, at a granular application section 114 of the first conveyor 110, with granular food particles from the looped elevator 400 falling onto the food AA, which contacts the food AA and "sticks" to the upwardly facing surface of the food and in some embodiments one or more side surfaces of the food AA.

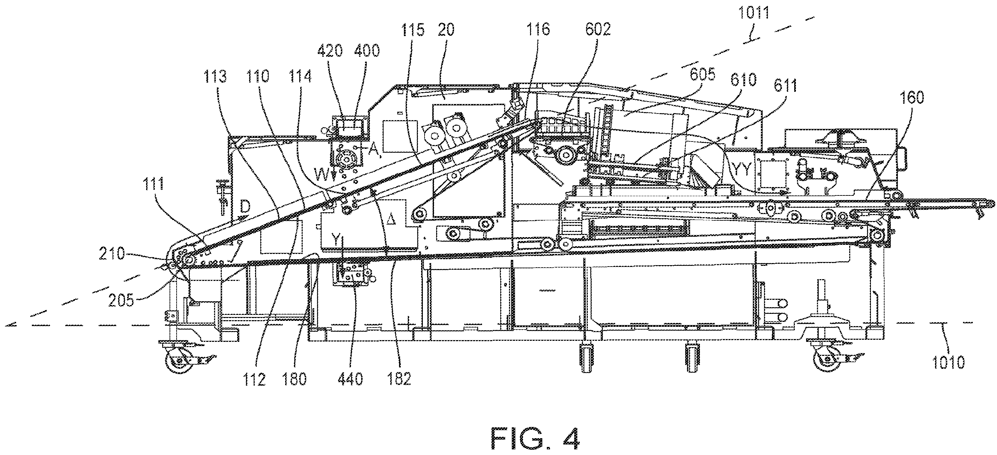

The food AA leaving the granular application section 115 moves along the first conveyor 110 to an exit portion 115. The exit portion 115 can be moved between two positions, an in-line position (FIGs. 3, 4) where the exit portion 115 is horizontally aligned with or slightly above a rotatable drum assembly 601 to cause food AA leaving the exit portion 115 of the first conveyor 110 to enter into the rotatable drum assembly 601 (arrow YY, FIG. 3). The rotatable drum assembly 601 causes the food AA to receive further granular food thereon as discussed above. The food AA leaving the rotatable drum assembly 601 falls onto a second conveyor 160, which transfers the food AA out of the housing 20 for further processing, such as baking, frying, freezing, or packaging.

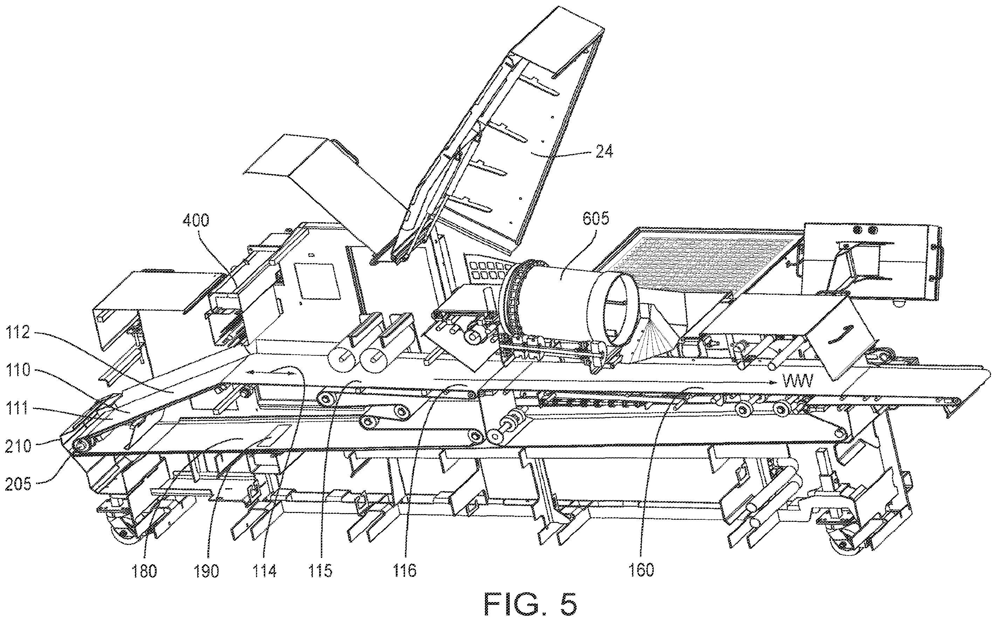

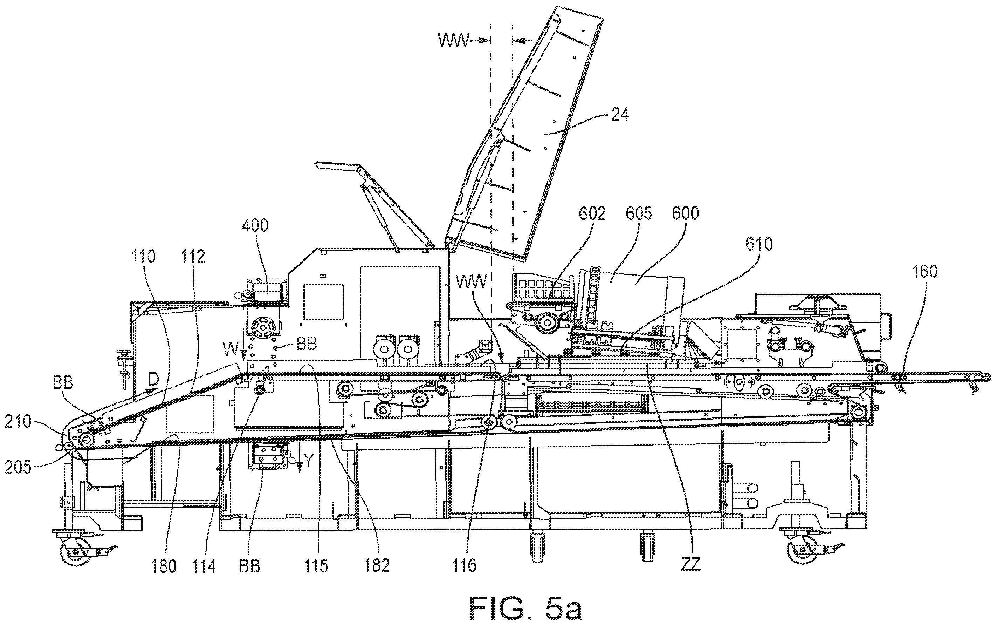

The exit portion 115 can be transitioned to a lower position (FIGs. 5, 5a) where outlet end 116 of the exit portion 115 is below the rotatable drum assembly 601, to cause food AA that reaches the outlet end 116 of the exit portion to fall onto a the second conveyor 160 (arrow WW, FIG. 5) to be transferred out of the housing 20, and the to be further processed as desired (see above).

Turning to FIGs. 2-5a, the rotatable drum assembly 601 is disposed within the housing 20. The rotatable drum assembly 601 includes one or a plurality of rotatable drums 605 (referred to as "drums" herein for simplicity, but the term drums may include embodiments with a single drum 605) that are provided to received foods AA therein through an inlet opening 605a and causes foods AA to leave through an outlet opening 605b. The drums 605 are each rotatable about their axis (such as in the direction arrow B - FIG. 2, but the drums can rotate in the opposite direction to B, and some of the drums can rotate in opposite directions - B and opposite to B - when there are a plurality of drums 605 provided). The drums 605 are provided to receive granular food particles BB therein, which flow into the rotatable drum assembly 601 from the exit portion 115 of the first conveyor 110, and through rotation with the food AA within the drum causes the food AA to be more fully covered with granular food particles BB. The drums rotate about their own axis in order to encourage mixing and interaction between the food AA and the granular food particles BB within the drum to cause further application of the granular food particles BB onto the food The rotatable drums 605 may be positioned at a slightly acute angle to the horizontal such that the outlet 605b is vertically below the inlet 605a to urge the food AA to move through the drums as they rotate with the additionally coated food AA falling out of the outlet 605b of the drum.

In some embodiments, the rotatable drum assembly 601 includes an inlet conveyor 602 that is fixed with respect to the rotatable drums 605, with the inlet conveyor 602 moving food AA that is received thereon to the inlet 605a of the drums 605. The conveyor 602 may be a single conveyor that is wide enough to feed into all of the drums 605, with fencing to urge the food AA upon the conveyor to the inlets of the drums 605, or the conveyor 602 may be multiple conveyors that each feed into specific ones of the plurality of drums 605. The conveyor 602 may be a wire conveyor with a pan therebelow (similar to the inlet conveyor 110 as further described below) or the conveyor may be planar to support the food AA and the granular particles BB received from the inlet conveyor 110 above the conveyor 602.

The rotatable drum assembly 601 is movable within the housing between a first longitudinal position (FIGs. 3, 4) where the rotatable drum assembly 601 is configured to receive food AA from the outlet end 116 of the exit 115 of the first conveyor 110 such that the food AA travels through the rotatable drums 605 (and conveyor 602 when provided) and then falls onto the second conveyor 160 (arrows YY). The rotatable drum assembly 601 can move to a second position (FIGs. 5, 5a) where the drum 605 and the conveyor 602 (when provided) is spaced away from the outlet end 116 of the exit 115 of the first conveyor 110, such that food AA that falls off of the outlet end 116 falls directly onto the second conveyor 160, thereby bypassing the rotatable drum assembly 601.

The rotatable drum assembly 601 may rest upon a frame 610 that supports wheels that ride along a track 611, with rotation of the wheels upon the track causing the rotatable drum assembly 601 to move between the first and second positions. The movement of the rotatable drum assembly 601 may be facilitated by a controller 1000 (FIG. 2 - schematic) that also controls the operation of the conveyors 110, 160, 180, as well as the granular food application system 399 as discussed herein.

The exit portion 115 of the first conveyor 110 is configured to move upwardly and downwardly with respect to the housing 20. Specifically, the exit portion 115 may move to the upward position to translate food AA that leaves the granular food application portion 114 toward the rotatable drum assembly 601 such that food that falls off the outlet 116 of the exit portion reaches the rotatable drum assembly 601, as discussed above. In some embodiments, the exit portion 115 when in the first position is at the same angle Δ, or a similar angle to the angle that the inlet portion 113 of the first conveyor makes with respect to the horizontal (FIG. 4, showing the exit portion 115 at the same angle as the inlet portion 113, other embodiments, the exit portion 115 may be at a slightly lower angle with respect to the horizontal than the inlet portion 113 makes.

The exit portion 115 may move downward to the second position (FIGs. 5, 5a) so that, in some embodiments, the exit portion 115 is longitudinally aligned with the outlet conveyor 160, or in other embodiments, the outlet end 116 of the exit portion is only slightly vertically above the second conveyor 160. In this embodiment, the outlet 116 of the exit portion 115 is vertically below the rotatable drum assembly 601. In both embodiments, food AA that has received a coating from of granular particulate BB, as discussed below, is transitioned to the outlet conveyor 160 in a manner to softly or with minimal disruption or impact forces upon the food AA as the food reaches the outlet conveyor 160, such as to avoid damage to the food AA and to avoid brushing off the coating of the granular food BB that was applied to the outer surface of the food AA.

In some embodiments, the rotatable drum assembly 601, when in the first longitudinal position (FIGs. 3, 4), and specifically in embodiments with the conveyors 602, prevents the exit portion of the first conveyor 110 from moving from the first position to the second position (and if in the first longitudinal position would prevent the exit portion 115 from transitioning from the second position to the first position). In some embodiments, the rotatable drum assembly (conveyor 602, when provided) physically blocks the outlet 116 of the exit portion from moving downwardly toward the second position. In other embodiments, exit conveyor may be physically capable of moving to the second position, but the controller 1000 prevents the exit conveyor 115 from moving downwardly to the second position when the rotatable drum assembly 601 is in the first longitudinal position. When it is desired to move the exit portion 115 to the second position, the controller 1000 causes the rotatable drum assembly 601 to move to the second longitudinal position (FIGs. 5, 5a) and then the controller causes the exit portion 115 to move to the second position.

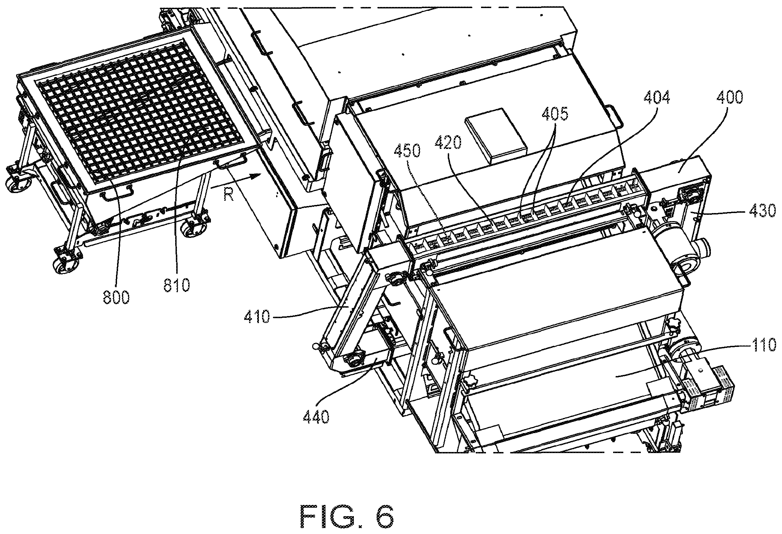

As best shown in FIGs. 6-9, a granular food application system 399 is provided. The granular food application system 399 is supported by the housing 20 and is positioned upstream of the rotatable drum assembly 601, such that granular food BB is applied to food AA upon the inlet conveyor 110 before the food reaches the rotatable drum assembly 601 or the second conveyor 160.

The granular food application system 399 includes a looped elevator 400 that surrounds the first conveyor 110 and interacts with the first conveyor at a granular food portion 114. The looped elevator 400 is configured to apply or drop granular food particles BB onto the first conveyor 110 and food AA resting upon the first conveyor from above. The granular food portion 114 may be within a first portion 113 of the first conveyor, which may be inclined upwardly at an acute angle with respect to the horizontal, or the granular food portion 115 may be upon the exit portion 115, which as discussed above is movable between a first inclined position and a second position, which may be at a smaller acute angle or may be horizontal.

The looped elevator includes a plurality of plates 405 that are spaced apart from adjacent plates, preferably with consistent spacing between adjacent plates along the entire periphery of the loop, and are fixed either directly to or fixed with respect to an endless member 404, which may be a chain, a belt, or the like. The endless member 404 is driven by one or more motor 406 either with the output motor shaft directly causing the endless member 404 to move (i.e. through a gear or wheel) or via a transmission. The motor preferably continuously moves the endless member 404 at a constant speed, as controlled by the controller 1000. In some embodiments, the controller may vary the motor's constant speed, which would similarly vary the endless member speed 404 as appropriate for the applicant of different types of granular particles BB.

The looped elevator 400 is positioned to surround the first conveyor 110 and a return conveyor 180 (FIGs. 5-5a). The return conveyor 180 in some embodiments, is formed from the same endless belt that forms the first conveyor 110, while in other embodiments, the return conveyor 180 may be formed with a separate belt.

The looped elevator 400 includes a upward portion 410 disposed outboard of a first side of the first conveyor, a upper portion 420 disposed above the first conveyor 110, a downward portion 430 that is disposed outboard a second side (opposite to the first side) of the first conveyor, and a lower return portion 440, which is positioned below the first conveyor 110 and the return conveyor 180. In some embodiments, the upper horizontal portion 420 is exactly horizontally, while in other embodiments the upper horizontal portion may extend along its entire length or for a portion of its length at an acute angle with respect to the horizontal.

In some embodiments, the looped elevator 400 travels through a plane PP that is at an acute angle with respect to a line through the first conveyor 110, and specifically a portion of the first conveyor 110 that is at an incline with respect to the horizontal.

In some embodiments, the plates traveling through the upward portion 410 travel vertically or in other embodiments in a direction that is offset from vertical by a small acute angle (such as up to about 20 degrees).

In some embodiments, the plates 405 traveling through the upper portion 420 travel horizontally, while in other embodiments, the plates travel in a direction that is offset from the horizontal by a small acute angle (such as up to about 20 degrees).

In some embodiments, the plates traveling through the downward portion 430 travel in a vertical direction, while in other embodiments in a direction that is offset from vertical by a small acute angle (such as up to about 20 degrees).

In some embodiments, the plates 405 traveling through the lower return portion 440 travel in a horizontal direction, while in other embodiments in a direction that is offset from horizontal by a small acute angle (such as up to about 20 degrees).

In some embodiments, a single plane PP extends through entire looped elevator 400, such that all of the plates 405 are aligned such that the plane PP extends through the center of each plate 405.

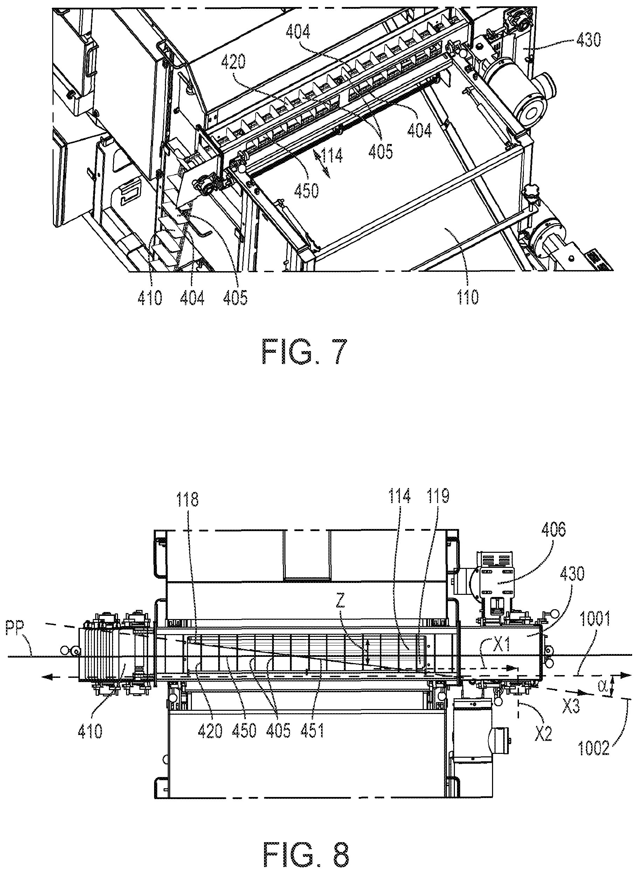

With reference to FIGs. 7 and 9, the plates 405 are disposed at different orientations with respect to the horizontal (i.e. a typical horizontal floor that the machine 10 rests upon). For example, the plates in the upper portion 420 are each aligned vertically, or approximately vertically, and the plates in the lower return portion 440 are also aligned vertically or substantially vertically. The term substantially vertically is defined to mean exactly vertical as well as where the plate 405 extends (with a best line through the plate in embodiments where the plates are not completely planar) at an angle no more than 15 degrees from either side of vertical, including such as 3, 6, 9, and 12 degrees and all angles between 0 and 15 degrees from the vertical). The vertical or approximately vertical orientation, when the plates extend across the upper portion 420, are provided such that all granular particulates BB that rest upon the plate 405 fall downwardly off of the plate 405 due to gravity. In embodiments, where the upper portion 420 is not horizontal along its length, then the plates 405 extending along that portion are formed such that they are perpendicular or substantially perpendicular to the line of motion of the endless member 404 along the portion (with the definition of substantially perpendicular having the same definition with respect to a perpendicular angle as the definition of substantially vertical has with respect to the term vertical).

In the lower return portion 440 it is preferable that the plates are vertical or approximately vertical, and in circumstances that the lower return portion 440 is not horizontal then the plates 405 within the lower return portion 440 are either perpendicular or approximately perpendicular to the line of motion of the endless member along the lower return portion 440. As discussed herein, a lower housing 445 surrounds the plates 405 within the lower return portion with a very close clearance between the edges of the plates 405 and the inner surface of the lower housing 445. The movement of the plates 405 within the housing 445 pushes granular food particles BB that fall into the housing 445 along the housing until reaching a shroud 470 that encloses a transition of the plates 405 from the lower return portion 440 to the upward portion 410. As best understood with review of FIG. 9, the shroud 470 (and the minimal space between the outer tip of the plate 405 and the shroud 470 urges granular particles BB being pushed into the shroud 470 by the plate through section 440, causes the granular particles BB to ride onto the plate 405 as the plate rotates to the horizontal or substantially horizontal orientation (defined below) of the plates within the upward section 410.

In the upward portion 410 the plates 405 are disposed in a horizontal orientation or a substantially horizontal orientation (with the definition of substantially horizontal orientation having the same definition with respect to a horizontal orientation as the definition of substantially vertical has with respect to the term vertical, as further limited by the orientation being close enough to horizontal such that a significant percentage of the granular particles BB that rest upon the plate when the plates move upwardly in the upward portion 410 do not fall off of the plates due to the force of gravity acting upon the granular particles BB, such as no more than 5 or 10 percent from the horizontal). For example, FIG. 9 depicts the plates 405 disposed along a line 1202, which is at a small acute angle γ with respect to the horizontal 1201, with this small angle γ being within the definition of substantially horizontal. FIG. 9 depicts the upward portion 410 as extending at a small angle away from the vertical, with the angle of the plates (line 1202) being directed from this small angle, i.e. in embodiments, where the plates 405 are rigidly fixed to be perpendicular (or at a small angle away from perpendicular) to the endless member 404 when the endless member is along a straight line.

As discussed above, the plates 405 travel across the upper portion 420 and are in a vertical or substantially vertical orientation. The transition of the plates from the horizontal or substantially horizontal orientation to the vertical or substantially vertical orientation causes the granular particles BB to fall off of the plates 405 due to gravity, as depicted schematically in FIG. 9. The upper portion 420 may include a metering plate 450 that is disposed below the endless member 404 and a lower edge of the collective plates 405 and is disposed above the first conveyor 110. The metering plate 450 has an edge 451 (FIG. 8) that when traveling from a first side 118 to a second side 119 of the conveyor is disposed along a line 1002 that is at an acute angle α with respect to the plate PP that the looped elevator 400 moves along. The angle of line 1002 is at a vector X3 such that a first component of the vector X1 is parallel to the plane PP and a second component X2 of the vector is in a direction opposite to the direction of travel of the first conveyor 110. The edge 451 is provided such that a width vertical downward opening between the plates 405 and the first conveyor 110 below the plates 405 increases as the plates move from an entrance into the upper portion 420 (just after rotating to vertical in transition from the upward portion 410) to an exit of the upper portion (just before the plates 405 rotate to the downward portion 430). This increasing width vertical downward opening assists with evenly distributing the volume of granular particles BB that fall downward onto the conveyor 110 (and onto the top and side surfaces of food products AA that are disposed upon the conveyor 110) across the width of the conveyor (with more of any opening for granular particles BB to fall onto the conveyor across the upper portion 420).

The first conveyor 110 and the return conveyor 180 may be formed with a wire mesh that is configured to support a large object thereon (i.e. an object with a major dimension larger than the larger dimension of the holes within the mesh) as shown schematically in FIG. 9. The wire mesh allows granular particles BB to fall through the mesh. The first conveyor 110 and the return conveyor 180 may each move across a pan (112- first conveyor 110; 182 - return conveyor 180 - FIG. 4) that receives granular particles that fall through the wire mesh. The wire mesh may contact the bottom surface of the pan such that the movement of the wire mesh over the pan pushes the granular particles BB along the pan.

In these embodiments, the granular particles BB that reach the end 116 of the first conveyor 110 fall off the first conveyor 110. When the exit portion 115 is in the upper position, the granular particles BB fall onto the rotatable drum assembly 601 (either directly into the drum 605 or onto the conveyor 602 that leads to the drum 605) and collect within the drum 605, and food AA that reaches the drum is further coated with particles BB as the drum 605 is rotated.

The return conveyor 180 may travel in a horizontal direction, or may travel with one or more portions at an angle with respect to the horizontal. The return conveyor 180 is below the first conveyor 110.

In situations where the exit portion 115 is in the lower position, the particles are collected and moved to the return conveyor 180 for use as described below.

The pan 182 below the return conveyor 180 includes a slot 190 that is disposed above the lower return portion 440 of the looped elevator 400. Accordingly, some of the granular particles BB that reach the slot 190 fall through the slot and into the housing 445, where the particles BB are pushed through the housing 445 with movement of the plates 405 toward the shroud 470 as discussed above.

The slot 190 may be sized such that all granular particles BB that reach the slot 190 do not fall therethrough and those particles BB are pushed with the return conveyor to a forward shroud 210 that surrounds a transition between the return conveyor 180 and the first conveyor 110, either a redirection of the conveyor endless belt (e.g. the endless wire mesh that forms the conveyors) when the return conveyor 180 transitions into the first conveyor 110 via a wheel 205 (which may be a roller, a wheel, a gear or sprocket or the like) are formed from the same continuous wire mesh, or allows for granular particles BB from the return conveyor 180 to be transitioned onto the first conveyor 110. The shroud 210 causes granular particles BB that are pushed by the return conveyor 180 to collect therein and interact with the wire mesh that forms the first conveyor 110 to push granular particles BB onto the first conveyor 110. Preferably, there is sufficient granular particles BB, such that the entrained particles within the first conveyor are piled across the first conveyor and above the upper surfaces of the wires so that the bottom surfaces of the food products AA that are placed on the first conveyor 110 contact granular particles BB and stick onto the bottom (and potentially side surfaces) to coat the food product.

A hopper 800 (FIGs. 1 and 6) is provided and connected to the housing 20. The hopper 800 receives and stores large quantities of granular particles BB for use within the machine 10 as discussed above. The hopper 800 may include a conveyor 810 that periodically or continuously moves granular particles BB from the hopper and distributes the granular particles BB onto the return conveyor 180, preferably before the return conveyor reaches the slot 190. In some embodiments, some of the granular particles BB that fall from the exit 116 of the first conveyor 110 return to the hopper 800.

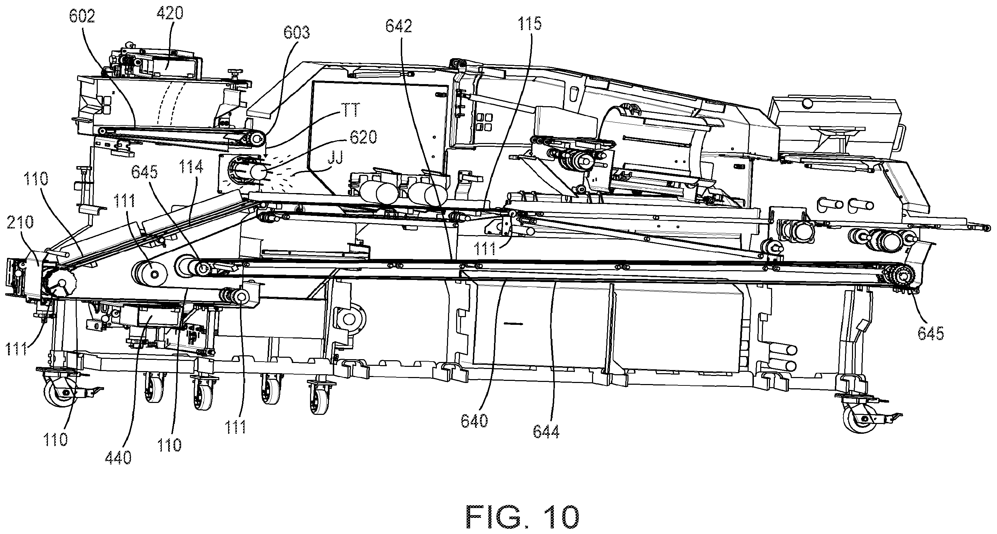

Turning now to FIGs. 10-12 a machine 10 for the application of granular food products 10 is provided. The machine is the same as the machine 10 discussed above and depicted in FIGs. 10 other than the discussion herein.

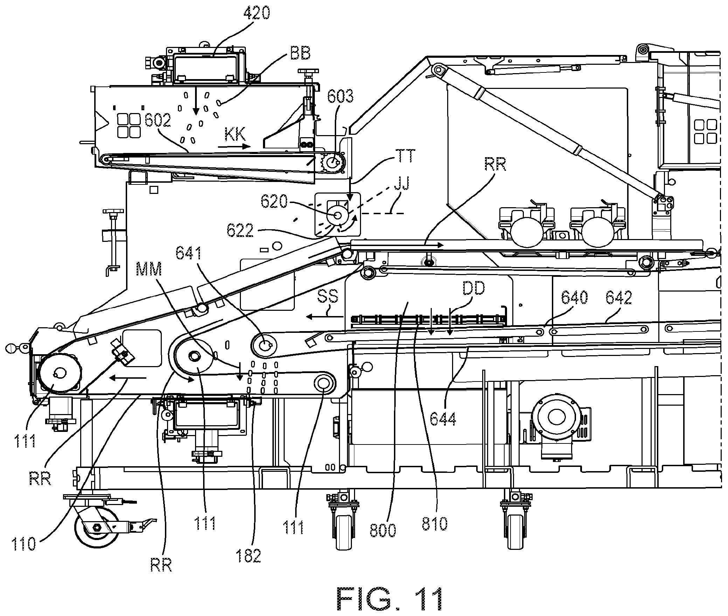

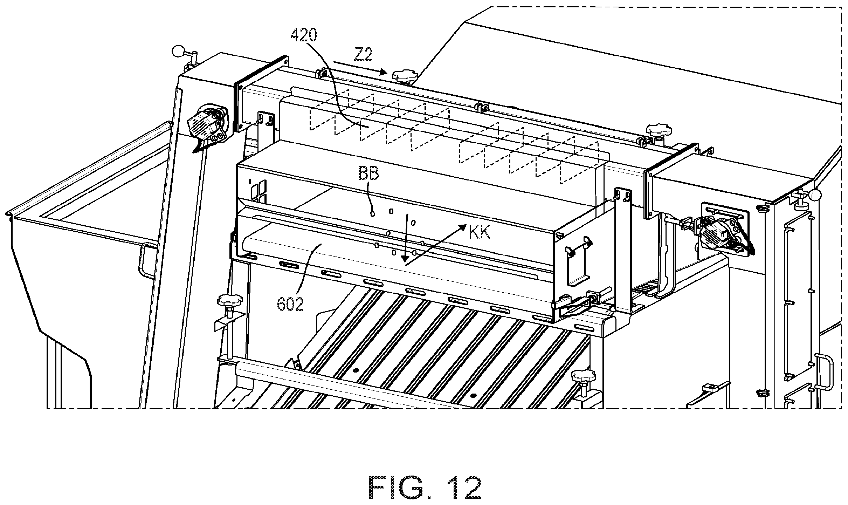

The machine includes the looped elevator 400 discussed above. Below the looped elevator is a conveyor 602 that is disposed below the endless member 404 and a lower edge of the collective plates 405 and is disposed above the first conveyor 110. The conveyor 602 extends along the length of the upper portion 420 of the looped elevator 400. As depicted schematically in FIGs. 11 and 12, granular food particles BB fall from the upper portion 420 and onto the conveyor 602, which travels in the direction KK. The granular food particles BB travel with the conveyor 602 to the end 603 thereof, where the granular food particles BB fall off and downward as depicted schematically as TT (FIG. 11).

In some embodiments, a rotatable component 620 is disposed below the end 603 of the conveyor 602 such that granular food particles BB that fall therefrom fall onto the rotatable component 620. The rotatable component may be a cylinder with a smooth surface, or in other embodiments, a varying surface, such as radially extending teeth 622 (schematic). The rotation of the rotatable component causes the granular food products that fall thereon to be expelled therefrom in various directions that is shown schematically as JJ. These airborne launched granular food products ultimately fall upon the conveyor 110 and the food AA disposed thereon in a random fashion, which assists with applying the granular food particles to the food AA in a non-uniform fashion, which may enhance the visual appearance of the processed food.

In some embodiments, the machine 10 may include a return conveyor 640 that is an independent conveyor from the first conveyor 110. The first conveyor 110 and the return conveyor are depicted in FIGs. 10 and 11. The first conveyor 110 is directed by rollers/inputs/gears 111 and the return conveyor is directed by rollers/inputs/gears 640, with the first conveyor extending in path RR and the return conveyor 640 extending in path SS.

The first conveyor 110 includes the functionality discussed above, and modified in that replacement granular food product BB from the hopper 600 and the hopper conveyor falls onto the return conveyor 640 and not the first conveyor 110. The return conveyor having received the granular food product BB moves in direction SS and reaches the end roller 641 (depicted in FIG. 11), which causes the granular food product BB to fall onto the first conveyor 110 and the pan or bottom surface 180 (as discussed with respect to the embodiments above). The pan 190 has a hole 190 that allows some of the granular food product BB to fall into the bottom portion 440 of the looped elevator 400 as discussed above. The remaining granular food product is moves to the forward shroud 210 as discussed in the embodiments above.

The use of independent first conveyor 110 and return conveyors 640 has been found through testing to yield longer life to the each of the conveyors than embodiments where the first conveyor 110 also was provided to perform the function of the return conveyor 640.

The return conveyor 640 may be a single loop with end rollers 641 at both ends of the conveyor and a top portion 642 that extends in the direction SS (and receives the granular food product BB from the hopper conveyor 610, and a second portion that travels (after the roller 641 in FIG. 11) in the direction opposite to direction SS and off the page of FIG. 11 in the right direction. The second end of the second conveyor 640 may be proximate to the outlet end of the housing to receive granular food product that falls from the food products AA after they pass through or bypass the drums 650, and to receive excess granular food product BB that falls from the drums 605 during operation.

The term "about" is specifically defined herein to include a range that includes the reference value and plus or minus 5% of the reference value. The term "substantially the same" is satisfied when the width of the end surfaces of the holes are both within the above range.

While the preferred embodiments of the disclosed have been described, it should be understood that the invention is not so limited and modifications may be made without departing from the disclosure. The scope of the disclosure is defined by the appended claims, and all devices that come within the meaning of the claims, either literally or by equivalence, are intended to be embraced therein.

The specification as contemplated by the applicant can be best understood with reference to the following representative paragraphs:

Representative Paragraph 1: A machine for applying a granular food coating to a food product, comprising:
a housing with an inlet and an exit portion;
a first conveyor disposed at least partially within the housing, the first conveyor extends from the inlet and through a granular food application portion and toward the exit portion, the first conveyor has an endless belt that continuously moves between the inlet of the housing and a portion proximate to the exit portion of the housing portions;
a second conveyor at least partially within the housing that receives a food product from the exit portion of the first conveyor;
one or more drums that each are rotatable about their axis and are supported by the housing, the one or more drums are longitudinally movable with respect to the first conveyor and the housing such that when the one or more drums are in a first longitudinal position, food items that reach the exit portion of the first conveyor are directed into one of the one or more drums, and when the one or more drums are in a second longitudinal position the exit portion of the first conveyor is spaced a distance from the one or more drums such that food items that reach the exit portion of the first conveyor leave the first conveyor and fall to the second conveyor without interacting with the one or more drums.

Representative Paragraph 2: The machine for applying a granular food coating to a food product of Representative Paragraph 1, wherein the endless belt of the conveyor moves between the inlet and the exit portion of the housing.

Representative Paragraph 3: The machine for applying a granular food coating to a food product of Representative Paragraph 1 or 2, wherein when the one or more drums are in the first position food leaving the one or more drums falls onto the second conveyor.

Representative Paragraph 4: The machine for applying a granular food coating to a food product of Representative Paragraph 3, wherein the exit portion of the first conveyor can move between an upper position and a lower position, wherein the exit portion is aligned with the one or more drums to direct food product from the exit portion and to the one or more drums when in the upper position, and wherein when in the lower position, the exit portion is positioned vertically below the one or more drums such that food product falling off of the first conveyor at the exit portion falls onto the second conveyor.

Representative Paragraph 5: The machine for applying a granular food coating to a food product of Representative Paragraph 4, wherein when the one or more drums are in the second longitudinal position, the one or more drums are moved away from the exit portion of the first conveyor to provide clearance for movement of the exit portion of the first conveyor between the upper and lower positions, and when the one or more drums are in the first longitudinal position, the exit portion of the first conveyor is prevented from moving from the first upper position to the lower position.

Representative Paragraph 6: The machine for applying a granular food coating to a food product of Representative Paragraph 1 or 2, further comprising a third conveyor that is disposed in a fixed relationship to the one or more drums, wherein the third conveyor is longitudinally movable with respect to the first conveyor and housing with movement of the one or more drums.

Representative Paragraph 7: The machine for applying a granular food coating to a food product of Representative Paragraph 6, wherein when the one or more drums are in the first longitudinal position, an inlet end of the third conveyor is proximate to and aligned with the exit portion of the first conveyor such that a food product that reaches the exit portion of the first conveyor moves onto the inlet end of the third conveyor and then is moved via the third conveyor into the drum of the one or more drums that is aligned with a width position of the food product upon the third conveyor.

Representative Paragraph 8: The machine for applying a granular food coating to a food product of Representative Paragraph 4, further comprising a third conveyor that is disposed in a fixed relationship to the one or more drums, wherein the third conveyor is longitudinally movable with respect to the first conveyor and housing with movement of the one or more drums,
wherein when the one or more drums are in the second longitudinal position, the one or more drums and the third conveyor are moved away from the exit portion of the first conveyor to provide clearance for movement of the exit portion of the first conveyor between the upper and lower positions, and when the one or more drums and the third conveyor are in the first longitudinal position, the exit portion of the first conveyor is prevented from moving from the first upper position to the lower position due to the third conveyor blocking an end of the exit portion from moving downwardly.

Representative Paragraph 9: The machine for applying a granular food coating to a food product of any one of Representative Paragraphs 1-8, further comprising a granular food application system, the granular food application system comprises:
a looped elevator disposed around the granular food application portion of the first conveyor, comprising a plurality of plates that are spaceably fixed with respect to each other to move around the first conveyor, the looped elevator moves the plurality of plates in a upward direction outboard a first side of the first conveyor, then in a direction above the first conveyor from the first side of the first conveyor to an opposite second side of the first conveyor, then in a downward direction outboard of the second side of the first conveyor, and then in a direction below the first conveyor from the second side to the first side of the first conveyor,
the plurality of plates are disposed in a substantially vertical orientation when traveling above and below the first conveyor and the plurality of plates are in a substantially horizontal orientation when traveling in the upward direction,
the plurality of plates are configured to receive granular food thereupon when traveling in the upward direction, and the food thereupon falls downwardly from the plurality of plates when the plurality of plates travel in the direction above the first conveyor, wherein a portion of the granular food falling from the plurality of plates eventually falls onto food that travels along the first conveyor below the plurality of plates.

Representative Paragraph 10: The machine for applying a granular food coating to a food product of Representative Paragraph 9, further comprising a metering plate disposed above the first conveyor and below the plurality of plates moving above and across the first conveyor, wherein the metering plate has an edge that is positioned at an acute angle with respect to the plane that the looped elevator moves along, wherein the edge of the metering plate when traveling from the first side of the first conveyor to the second side of the first conveyor has a vector component that is parallel to the plane, and a second vector component that is in a direction opposite to a line in the direction of motion of the first conveyor, wherein granular food upon the metering plate falls off of the metering plate along the edge and onto the first conveyor or food traveling upon the first conveyor therebelow.

Representative Paragraph 11: The machine for applying a granular food coating to a food product of any one of Representative Paragraphs 9-10, further comprising a return conveyor, which is disposed below the first conveyor and is a part of the same endless belt as the first conveyor, wherein the return conveyor travels toward the inlet of the first conveyor, wherein the plurality of plates when traveling in the horizontal direction below the first conveyor from the second side to the first side of the first conveyor are also below the return conveyor.

Representative Paragraph 12: The machine for applying a granular food coating to a food product of Representative Paragraph 11, wherein the endless belt that forms the first conveyor and the return conveyor is a wire mesh that forms a plurality of apertures along its width, wherein the return conveyor travels over a tray, wherein the tray has an elongate aperture that is disposed vertically above the plurality of plates, to allow granular food disposed in conjunction with the return conveyor to fall through the elongate aperture and into engagement with the plurality of plates traveling below the return conveyor.

Representative Paragraph 13: The machine for applying a granular food coating to a food product of Representative Paragraph 12, further comprising a tray disposed below the first conveyor, the tray receives granular food that falls thereon from above the first conveyor and the combination of the moving first conveyor and the tray urges granular food thereon to be moved along with the first conveyor toward and over the exit of the first conveyor.

Representative Paragraph 14: The machine for applying a granular food coating to a food product of Representative Paragraph 13, further comprising a shroud and wheel that is disposed proximate to an inlet of the first conveyor, the wheel engages the endless belt that forms the return conveyor and the first conveyor and redirects the endless belt arriving to the wheel from the return conveyor to establish the inlet of the first conveyor, wherein the shroud surrounds a portion of the return conveyor and the wheel, wherein the shroud collects granular food that travels with the return conveyor and interaction between the belt and the collected granular food within the shroud causes granular food to be entrained with the belt through inlet portion of the first conveyor, wherein the entrained granular food upon the belt within the first conveyor contacts food that is deposited upon the first conveyor causing a surface of the food in contact with or in close proximity to the belt along the first conveyor to receive a coating of granular food product thereon.

Representative Paragraph 15: The machine for applying a granular food coating to a food product of Representative Paragraph 14, further comprising a second shroud that is disposed around a position where the looped elevator transitions from the lower return portion below the first conveyor to the upward portion outboard of the first side of the first conveyor, wherein granular food product that falls through the elongate aperture and into engagement with the plurality of plates traveling below the return conveyor travels to the second shroud with the travel of the plurality of plates, wherein collected granular food product within the second shroud rests upon the plurality of plates traveling in the vertically upward direction.

Representative Paragraph 16: The machine for applying a granular food coating of any one of Representative Paragraphs 9-15, wherein the plurality of plates are each fixed with respect to an endless member and disposed with a constant distance between each adjacent plate.

Representative Paragraph 17: The machine for applying granular food coating of Representative Paragraph 16, wherein the endless member is one of a belt or a chain.

Representative Paragraph 18: The machine for applying granular food coating of any one of Representative Paragraphs 11-17, further comprising a hopper configured to receive granular food product and continuously or periodically apply the granular food product from the hopper and onto the return conveyor.

Representative Paragraph 19: A machine for applying a granular food coating to a food product, comprising:
a housing with an inlet and an exit portion;
a first conveyor that extends from the inlet of the housing and through a granular food application portion and toward an exit portion of the housing, the conveyor has an endless belt that continuously moves between the inlet of the housing a portion proximate to the exit portion of the housing;
a looped elevator disposed around the granular food application portion of the first conveyor, comprising a plurality of plates that are spaceably fixed with respect to each other to move around the first conveyor, the looped elevator moves the plurality of plates in a upward direction outboard a first side of the first conveyor, then in a direction above the first conveyor from the first side of the first conveyor to an opposite second side of the first conveyor, then in a downward direction outboard of the second side of the first conveyor, and then in a direction below the first conveyor from the second side to the first side of the first conveyor,
the plurality of plates are disposed in a substantially vertical orientation when traveling above and below the first conveyor and the plurality of plates are in a substantially horizontal orientation when traveling in the upward direction,
the plurality of plates are configured to receive granular food thereupon when traveling in the upward direction, and the food thereupon falls downwardly from the plurality of plates when the plurality of plates travel above the first conveyor, wherein a portion of the granular food falling from the plurality of plates eventually falls onto food that travels along the first conveyor below the plurality of plates.

Representative Paragraph 20. The machine for applying a granular food coating to a food product of Representative Paragraph 19, wherein the endless belt of the conveyor moves between the inlet and the exit portion of the housing.

Representative Paragraph 21: The machine for applying a granular food coating to a food product of Representative Paragraph 19 or 20, further comprising a metering plate disposed above the first conveyor and below the plurality of plates disposed above the first conveyor, wherein the metering plate has an edge that is positioned at an acute angle with respect to the plane that the looped elevator moves along, wherein the edge of the metering plate when traveling from the first side of the first conveyor to the second side of the first conveyor has a vector component that is parallel to the plane, and a second vector component that is in a direction opposite to a line in the first of motion of the first conveyor, wherein granular food upon the metering plate falls off of the metering plate along the edge and onto the first conveyor therebelow.

Representative Paragraph 22: The machine for applying a granular food coating to a food product of any one of Representative Paragraphs 19-21, further comprising a return conveyor, which is disposed below the first conveyor and is a part of the same endless belt as the first conveyor, wherein the return conveyor travels toward the inlet of the first conveyor, wherein the plurality of plates when traveling in the horizontal direction below the first conveyor from the second side to the first side of the first conveyor are below the return conveyor.

Representative Paragraph 23: The machine for applying a granular food coating to a food product of Representative Paragraph 22, wherein the endless belt that forms the first conveyor and the return conveyor is a wire mesh that forms a plurality of apertures along its width, wherein the return conveyor travels over a tray, wherein the tray has an elongate aperture that is disposed vertically above the plurality of plates, to allow granular food disposed in conjunction with the return conveyor to fall through the elongate aperture and into contact with the plurality of plates traveling below the return conveyor.

Representative Paragraph 24: The machine for applying a granular food coating to a food product of Representative Paragraph 23, further comprising a tray disposed below the first conveyor, the tray receives granular food that falls thereon from above the first conveyor and the combination of the moving first conveyor and the tray urges granular food thereon to be moved along with the first conveyor toward and over the exit of the first conveyor.

Representative Paragraph 25: The machine for applying a granular food coating to a food product of Representative Paragraph 24, further comprising a shroud and wheel that is disposed proximate to an inlet of the first conveyor, the wheel engages the endless belt that forms the return conveyor and the first conveyor and redirects the endless belt arriving to the wheel from the return conveyor to establish the inlet of the first conveyor, wherein the shroud surrounds a portion of the return conveyor and the wheel, wherein the shroud collects granular food that travels with the return conveyor and interaction between the belt and the collected granular food within the shroud causes granular food to be entrained with the belt through inlet portion of the first conveyor, wherein the entrained granular food upon the belt within the first conveyor contacts food that is deposited upon the first conveyor causing a surface of the food in contact with or in close proximity to the belt along the first conveyor to receive a coating of granular food product thereon.

Representative Paragraph 26: The machine for applying a granular food coating to a food product of Representative Paragraph 25, further comprising a second shroud that is disposed around a position where the looped elevator transitions from the lower return portion below the first conveyor to the upward portion outboard of the first side of the first conveyor, wherein granular food product that falls through the elongate aperture an into engagement with the plurality of plates traveling below the return conveyor travels to the second shroud with the travel of the plurality of plates, wherein collected granular food product within the second shroud rests upon the plurality of plates traveling in the vertically upward direction.

Representative Paragraph 27: The machine for applying a granular food coating to a food product of Representative Paragraph 23, further comprising a shroud that is disposed around a position where the looped elevator transitions from the horizontal direction below the first conveyor to the vertically upward direction outboard of the first side of the first conveyor, wherein granular food product that falls through the elongate aperture an into contact with the plurality of plates traveling below the return conveyor travels to the shroud with the travel of the plurality of plates, wherein collected granular food product within the shroud rests upon the plurality of plates traveling in the vertically upward direction.

Representative Paragraph 28: The machine for applying a granular food coating of any one of Representative Paragraphs 19-27, wherein the plurality of plates are each fixed with respect to an endless member and disposed with a constant distance between each adjacent plate.

Representative Paragraph 29: The machine for applying granular food coating of Representative Paragraph 28, wherein the endless member is one of a belt or a chain.

Representative Paragraph 30: The machine for applying granular food coating of any one of Representative Paragraphs 22-29, further comprising a hopper configured to receive granular food product and continuously or periodically apply the granular food product from the hopper and onto the return conveyor.

Representative Paragraph 31: The machine for applying a granular food coating to a food product of Representative Paragraph 9, further comprising a fourth conveyor that is disposed below the plurality of plates of the looped elevator when traveling from the first side of the conveyor to the opposite second side of the conveyor, wherein the fourth conveyor receives granular food that falls from the plurality of plates that travel above the first conveyor;
wherein the fourth conveyor travels toward an end thereof, wherein when the fourth conveyor reaches the end the granular food thereon falls downwardly and onto the first conveyor or food traveling upon the first conveyor therebelow.
Representative Paragraph 32: The machine for applying a granular food coating to a food product of Representative Paragraph 31, further comprising a rotatable component that is located vertically below the end of the fourth conveyor in a position where granular food falling downwardly from the fourth conveyor contacts a surface of the rotatable component.

Representative Paragraph 33: The machine for applying a granular food coating to a food product of Representative Paragraph 32, wherein the rotatable component comprises a plurality of radial extending features therefrom that are disposed around portions of an outer circumference of the rotatable component, wherein during operation the rotatable component rotates about its longitudinal axis which causes granular food falling thereupon to be directed therefrom in various directions.

Representative Paragraph 34: The machine for applying a granular food coating to a food product of any one of Representative Paragraphs 9-10 or 31-33, further comprising a return conveyor, which is disposed below the first conveyor for a portion of a length of the first conveyor, wherein the return conveyor travels toward the inlet of the first conveyor, wherein the plurality of plates when traveling in the horizontal direction below the first conveyor from the second side to the first side of the first conveyor are also below the return conveyor a plane that that extends through the return conveyor.

Representative Paragraph 35: The machine for applying a granular food coating to a food product of Representative Paragraph 34, further comprising a hopper configured to receive granular food product and continuously or periodically apply the granular food product from the hopper and onto the return conveyor.
the return conveyor is configured to receive granular that falls thereon through the first conveyor and to also receive granular food added to the machine by the hopper, wherein the return conveyor extends to and above a portion of the first conveyor at a transition end of the return conveyor, wherein granular food that is disposed upon the return conveyor reaching the transition end falls off the return conveyor as the return conveyor extends along the transition end and falls onto the first conveyor or a pan disposed below the first conveyor.

Representative Paragraph 36: The machine for applying a granular food coating to a food product of Representative Paragraph 35, wherein movement of the first conveyor away from a position below the transition of the return conveyor urges granular food product toward the inlet of the first conveyor.
Embodiments of the disclosure are set out in the following numbered clauses:
1. A machine for applying a granular food coating to a food product, comprising.
   a housing with an inlet and an exit portion;
      a first conveyor disposed at least partially within the housing, the first conveyor extends from the inlet and through a granular food application portion and toward the exit portion, the first conveyor has an endless belt that continuously moves between the inlet of the housing and a portion proximate to the exit portion of the housing portions;
   a second conveyor at least partially within the housing that receives a food product from the exit portion of the first conveyor;
   one or more drums that each are rotatable about their axis and are supported by the housing, the one or more drums are longitudinally movable with respect to the first conveyor and the housing such that when the one or more drums are in a first longitudinal position, food items that reach the exit portion of the first conveyor are directed into one of the one or more drums, and when the one or more drums are in a second longitudinal position the exit portion of the first conveyor is spaced a distance from the one or more drums such that food items that reach the exit portion of the first conveyor leave the first conveyor and fall to the second conveyor without interacting with the one or more drums.
2. The machine for applying a granular food coating to a food product of clause 1, wherein the endless belt of the conveyor moves between the inlet and the exit portion of the housing.
3. The machine for applying a granular food coating to a food product of clause 1 or 2, wherein when the one or more drums are in the first position food leaving the one or more drums falls onto the second conveyor.
4. The machine for applying a granular food coating to a food product of clause 3, wherein the exit portion of the first conveyor can move between an upper position and a lower position, wherein the exit portion is aligned with the one or more drums to direct food product from the exit portion and to the one or more drums when in the upper position, and wherein when in the lower position, the exit portion is positioned vertically below the one or more drums such that food product falling off of the first conveyor at the exit portion falls onto the second conveyor.
5. The machine for applying a granular food coating to a food product of clause 4, wherein when the one or more drums are in the second longitudinal position, the one or more drums are moved away from the exit portion of the first conveyor to provide clearance for movement of the exit portion of the first conveyor between the upper and lower positions, and when the one or more drums are in the first longitudinal position, the exit portion of the first conveyor is prevented from moving from the first upper position to the lower position.
6. The machine for applying a granular food coating to a food product of clause 1 or 2, further comprising a third conveyor that is disposed in a fixed relationship to the one or more drums, wherein the third conveyor is longitudinally movable with respect to the first conveyor and housing with movement of the one or more drums.
7. The machine for applying a granular food coating to a food product of clause 6, wherein when the one or more drums are in the first longitudinal position, an inlet end of the third conveyor is proximate to and aligned with the exit portion of the first conveyor such that a food product that reaches the exit portion of the first conveyor moves onto the inlet end of the third conveyor and then is moved via the third conveyor into the drum of the one or more drums that is aligned with a width position of the food product upon the third conveyor.
8. The machine for applying a granular food coating to a food product of clause 4, further comprising a third conveyor that is disposed in a fixed relationship to the one or more drums, wherein the third conveyor is longitudinally movable with respect to the first conveyor and housing with movement of the one or more drums,
   wherein when the one or more drums are in the second longitudinal position, the one or more drums and the third conveyor are moved away from the exit portion of the first conveyor to provide clearance for movement of the exit portion of the first conveyor between the upper and lower positions, and when the one or more drums and the third conveyor are in the first longitudinal position, the exit portion of the first conveyor is prevented from moving from the first upper position to the lower position due to the third conveyor blocking an end of the exit portion from moving downwardly.
9. The machine for applying a granular food coating to a food product of any one of clauses 1-8, further comprising a granular food application system, the granular food application system comprises.
   a looped elevator disposed around the granular food application portion of the first conveyor, comprising a plurality of plates that are spaceably fixed with respect to each other to move around the first conveyor, the looped elevator moves the plurality of plates in a upward direction outboard a first side of the first conveyor, then in a direction above the first conveyor from the first side of the first conveyor to an opposite second side of the first conveyor, then in a downward direction outboard of the second side of the first conveyor, and then in a direction below the first conveyor from the second side to the first side of the first conveyor,
   the plurality of plates are disposed in a substantially vertical orientation when traveling above and below the first conveyor and the plurality of plates are in a substantially horizontal orientation when traveling in the upward direction,
   the plurality of plates are configured to receive granular food thereupon when traveling in the upward direction, and the food thereupon falls downwardly from the plurality of plates when the plurality of plates travel in the direction above the first conveyor, wherein a portion of the granular food falling from the plurality of plates eventually falls onto food that travels along the first conveyor below the plurality of plates.
10. The machine for applying a granular food coating to a food product of clause 9, further comprising a metering plate disposed above the first conveyor and below the plurality of plates moving above and across the first conveyor, wherein the metering plate has an edge that is positioned at an acute angle with respect to the plane that the looped elevator moves along, wherein the edge of the metering plate when traveling from the first side of the first conveyor to the second side of the first conveyor has a vector component that is parallel to the plane, and a second vector component that is in a direction opposite to a line in the direction of motion of the first conveyor, wherein granular food upon the metering plate falls off of the metering plate along the edge and onto the first conveyor or food traveling upon the first conveyor therebelow.
11. The machine for applying a granular food coating to a food product of any one of clauses 9-10, further comprising a return conveyor, which is disposed below the first conveyor and is a part of the same endless belt as the first conveyor, wherein the return conveyor travels toward the inlet of the first conveyor, wherein the plurality of plates when traveling in the horizontal direction below the first conveyor from the second side to the first side of the first conveyor are also below the return conveyor.
12. The machine for applying a granular food coating to a food product of clause 11, wherein the endless belt that forms the first conveyor and the return conveyor is a wire mesh that forms a plurality of apertures along its width, wherein the return conveyor travels over a tray, wherein the tray has an elongate aperture that is disposed vertically above the plurality of plates, to allow granular food disposed in conjunction with the return conveyor to fall through the elongate aperture and into engagement with the plurality of plates traveling below the return conveyor.
13. The machine for applying a granular food coating to a food product of clause 12, further comprising a tray disposed below the first conveyor, the tray receives granular food that falls thereon from above the first conveyor and the combination of the moving first conveyor and the tray urges granular food thereon to be moved along with the first conveyor toward and over the exit of the first conveyor.
14. The machine for applying a granular food coating to a food product of clause 13, further comprising a shroud and wheel that is disposed proximate to an inlet of the first conveyor, the wheel engages the endless belt that forms the return conveyor and the first conveyor and redirects the endless belt arriving to the wheel from the return conveyor to establish the inlet of the first conveyor, wherein the shroud surrounds a portion of the return conveyor and the wheel, wherein the shroud collects granular food that travels with the return conveyor and interaction between the belt and the collected granular food within the shroud causes granular food to be entrained with the belt through inlet portion of the first conveyor, wherein the entrained granular food upon the belt within the first conveyor contacts food that is deposited upon the first conveyor causing a surface of the food in contact with or in close proximity to the belt along the first conveyor to receive a coating of granular food product thereon.
15. The machine for applying a granular food coating to a food product of clause 14, further comprising a second shroud that is disposed around a position where the looped elevator transitions from the lower return portion below the first conveyor to the upward portion outboard of the first side of the first conveyor, wherein granular food product that falls through the elongate aperture and into engagement with the plurality of plates traveling below the return conveyor travels to the second shroud with the travel of the plurality of plates, wherein collected granular food product within the second shroud rests upon the plurality of plates traveling in the vertically upward direction.
16. The machine for applying a granular food coating of any one of clauses 9-15, wherein the plurality of plates are each fixed with respect to an endless member and disposed with a constant distance between each adjacent plate.
17. The machine for applying granular food coating of clause 16, wherein the endless member is one of a belt or a chain.
18. The machine for applying granular food coating of any one of clauses 11-17, further comprising a hopper configured to receive granular food product and continuously or periodically apply the granular food product from the hopper and onto the return conveyor.
19. A machine for applying a granular food coating to a food product, comprising.
   a housing with an inlet and an exit portion;
   a first conveyor that extends from the inlet of the housing and through a granular food application portion and toward an exit portion of the housing, the conveyor has an endless belt that continuously moves between the inlet of the housing a portion proximate to the exit portion of the housing;
   a looped elevator disposed around the granular food application portion of the first conveyor, comprising a plurality of plates that are spaceably fixed with respect to each other to move around the first conveyor, the looped elevator moves the plurality of plates in a upward direction outboard a first side of the first conveyor, then in a direction above the first conveyor from the first side of the first conveyor to an opposite second side of the first conveyor, then in a downward direction outboard of the second side of the first conveyor, and then in a direction below the first conveyor from the second side to the first side of the first conveyor,
   the plurality of plates are disposed in a substantially vertical orientation when traveling above and below the first conveyor and the plurality of plates are in a substantially horizontal orientation when traveling in the upward direction,
   the plurality of plates are configured to receive granular food thereupon when traveling in the upward direction, and the food thereupon falls downwardly from the plurality of plates when the plurality of plates travel above the first conveyor, wherein a portion of the granular food falling from the plurality of plates eventually falls onto food that travels along the first conveyor below the plurality of plates.
20. The machine for applying a granular food coating to a food product of clause 19, wherein the endless belt of the conveyor moves between the inlet and the exit portion of the housing.
21. The machine for applying a granular food coating to a food product of clause 19 or 20, further comprising a metering plate disposed above the first conveyor and below the plurality of plates disposed above the first conveyor, wherein the metering plate has an edge that is positioned at an acute angle with respect to the plane that the looped elevator moves along, wherein the edge of the metering plate when traveling from the first side of the first conveyor to the second side of the first conveyor has a vector component that is parallel to the plane, and a second vector component that is in a direction opposite to a line in the first of motion of the first conveyor, wherein granular food upon the metering plate falls off of the metering plate along the edge and onto the first conveyor therebelow.
22. The machine for applying a granular food coating to a food product of any one of clauses 19-21, further comprising a return conveyor, which is disposed below the first conveyor and is a part of the same endless belt as the first conveyor, wherein the return conveyor travels toward the inlet of the first conveyor, wherein the plurality of plates when traveling in the horizontal direction below the first conveyor from the second side to the first side of the first conveyor are below the return conveyor.
23. The machine for applying a granular food coating to a food product of clause 22, wherein the endless belt that forms the first conveyor and the return conveyor is a wire mesh that forms a plurality of apertures along its width, wherein the return conveyor travels over a tray, wherein the tray has an elongate aperture that is disposed vertically above the plurality of plates, to allow granular food disposed in conjunction with the return conveyor to fall through the elongate aperture and into contact with the plurality of plates traveling below the return conveyor.
24. The machine for applying a granular food coating to a food product of clause 23, further comprising a tray disposed below the first conveyor, the tray receives granular food that falls thereon from above the first conveyor and the combination of the moving first conveyor and the tray urges granular food thereon to be moved along with the first conveyor toward and over the exit of the first conveyor.
25. The machine for applying a granular food coating to a food product of clause 24, further comprising a shroud and wheel that is disposed proximate to an inlet of the first conveyor, the wheel engages the endless belt that forms the return conveyor and the first conveyor and redirects the endless belt arriving to the wheel from the return conveyor to establish the inlet of the first conveyor, wherein the shroud surrounds a portion of the return conveyor and the wheel, wherein the shroud collects granular food that travels with the return conveyor and interaction between the belt and the collected granular food within the shroud causes granular food to be entrained with the belt through inlet portion of the first conveyor, wherein the entrained granular food upon the belt within the first conveyor contacts food that is deposited upon the first conveyor causing a surface of the food in contact with or in close proximity to the belt along the first conveyor to receive a coating of granular food product thereon.
26. The machine for applying a granular food coating to a food product of clause 25, further comprising a second shroud that is disposed around a position where the looped elevator transitions from the lower return portion below the first conveyor to the upward portion outboard of the first side of the first conveyor, wherein granular food product that falls through the elongate aperture an into engagement with the plurality of plates traveling below the return conveyor travels to the second shroud with the travel of the plurality of plates, wherein collected granular food product within the second shroud rests upon the plurality of plates traveling in the vertically upward direction.
27. The machine for applying a granular food coating to a food product of clause 23, further comprising a shroud that is disposed around a position where the looped elevator transitions from the horizontal direction below the first conveyor to the vertically upward direction outboard of the first side of the first conveyor, wherein granular food product that falls through the elongate aperture an into contact with the plurality of plates traveling below the return conveyor travels to the shroud with the travel of the plurality of plates, wherein collected granular food product within the shroud rests upon the plurality of plates traveling in the vertically upward direction.
28. The machine for applying a granular food coating of any one of clauses 19-27, wherein the plurality of plates are each fixed with respect to an endless member and disposed with a constant distance between each adjacent plate.
29. The machine for applying granular food coating of clause 28, wherein the endless member is one of a belt or a chain.
30. The machine for applying granular food coating of any one of clauses 22-29, further comprising a hopper configured to receive granular food product and continuously or periodically apply the granular food product from the hopper and onto the return conveyor.
31. The machine for applying a granular food coating to a food product of clause 9, further comprising a fourth conveyor that is disposed below the plurality of plates of the looped elevator when traveling from the first side of the conveyor to the opposite second side of the conveyor, wherein the fourth conveyor receives granular food that falls from the plurality of plates that travel above the first conveyor;
   wherein the fourth conveyor travels toward an end thereof, wherein when the fourth conveyor reaches the end the granular food thereon falls downwardly and onto the first conveyor or food traveling upon the first conveyor therebelow.
32. The machine for applying a granular food coating to a food product of clause 31, further comprising a rotatable component that is located vertically below the end of the fourth conveyor in a position where granular food falling downwardly from the fourth conveyor contacts a surface of the rotatable component.
33. The machine for applying a granular food coating to a food product of clause 32, wherein the rotatable component comprises a plurality of radial extending features therefrom that are disposed around portions of an outer circumference of the rotatable component, wherein during operation the rotatable component rotates about its longitudinal axis which causes granular food falling thereupon to be directed therefrom in various directions.
34. The machine for applying a granular food coating to a food product of any one of clauses 9-10 or 31-33, further comprising a return conveyor, which is disposed below the first conveyor for a portion of a length of the first conveyor, wherein the return conveyor travels toward the inlet of the first conveyor, wherein the plurality of plates when traveling in the horizontal direction below the first conveyor from the second side to the first side of the first conveyor are also below the return conveyor a plane that that extends through the return conveyor.
35. The machine for applying a granular food coating to a food product of clause 34, further comprising a hopper configured to receive granular food product and continuously or periodically apply the granular food product from the hopper and onto the return conveyor.
   the return conveyor is configured to receive granular that falls thereon through the first conveyor and to also receive granular food added to the machine by the hopper, wherein the return conveyor extends to and above a portion of the first conveyor at a transition end of the return conveyor, wherein granular food that is disposed upon the return conveyor reaching the transition end falls off the return conveyor as the return conveyor extends along the transition end and falls onto the first conveyor or a pan disposed below the first conveyor.
36. The machine for applying a granular food coating to a food product of clause 35, wherein movement of the first conveyor away from a position below the transition of the return conveyor urges granular food product toward the inlet of the first conveyor.

## Claims

1. A machine (10) for applying a granular food coating to a food product, comprising.
a housing (20) with an inlet and an exit portion;
a first conveyor (110) that extends from an inlet (111) and through a granular food application portion (114) and toward an exit portion, the first conveyor has an endless belt that continuously moves between the inlet of the housing a portion proximate to the exit portion of the housing;
a looped elevator (400) disposed around the granular food application portion of the first conveyor (110), comprising a plurality of plates (405) that are spaceably fixed with respect to each other to move around the first conveyor, the looped elevator moves the plurality of plates in a upward direction (Z1) outboard a first side of the first conveyor, then in a direction (Z2) above the first conveyor from the first side of the first conveyor to an opposite second side of the first conveyor, then in a downward direction (Z3) outboard of the second side of the first conveyor, and then in a direction (Z4) below the first conveyor from the second side to the first side of the first conveyor,
the plurality of plates are disposed in a substantially vertical orientation when traveling above and below the first conveyor and the plurality of plates are in a substantially horizontal orientation when traveling in the upward direction,
the plurality of plates are configured to receive granular food (BB) thereupon when traveling in the upward direction, and the food thereupon falls downwardly from the plurality of plates when the plurality of plates travel above the first conveyor, wherein a portion of the granular food falling from the plurality of plates eventually falls onto food that travels along the first conveyor below the plurality of plates,
further comprising a second conveyor (602) that is disposed below the plurality of plates of the looped elevator when traveling from the first side of the second conveyor to the opposite second side of the second conveyor, wherein the second conveyor receives granular food that falls from the plurality of plates that travel above the first conveyor;
wherein the second conveyor travels toward an end (603) thereof, wherein when the second conveyor reaches the end the granular food thereon falls downwardly and onto the first conveyor or food traveling upon the first conveyor therebelow.

2. The machine for applying a granular food coating to a food product of claim 1, further comprising a rotatable component (620) that is located vertically below the end of the second conveyor in a position where granular food falling downwardly from the second conveyor contacts a surface of the rotatable component.

3. The machine for applying a granular food coating to a food product of claim 2, wherein the rotatable component comprises a plurality of radial extending features (622) therefrom that are disposed around portions of an outer circumference of the rotatable component, wherein during operation the rotatable component rotates about its longitudinal axis which causes granular food falling thereupon to be directed therefrom in various directions.

4. The machine for applying a granular food coating to a food product of claim 1, wherein the endless belt of the conveyor moves between the inlet and the exit portion of the housing.

5. The machine for applying a granular food coating to a food product of any one of claims 1-4, further comprising a return conveyor (180), which is disposed below the first conveyor and is a part of the same endless belt as the first conveyor, wherein the return conveyor travels toward the inlet of the first conveyor, wherein the plurality of plates when traveling in the horizontal direction below the first conveyor from the second side to the first side of the first conveyor are below the return conveyor.

6. The machine for applying a granular food coating to a food product of claim 5, wherein the endless belt that forms the first conveyor and the return conveyor is a wire mesh that forms a plurality of apertures along its width, wherein the return conveyor travels over a tray (182), wherein the tray has an elongate aperture (190) that is disposed vertically above the plurality of plates, to allow granular food disposed in conjunction with the return conveyor to fall through the elongate aperture and into contact with the plurality of plates traveling below the return conveyor.

7. The machine for applying a granular food coating to a food product of claim 6, further comprising a tray (112) disposed below the first conveyor, the tray receives granular food that falls thereon from above the first conveyor and the combination of the moving first conveyor and the tray urges granular food thereon to be moved along with the first conveyor toward and over the exit of the first conveyor.

8. The machine for applying a granular food coating to a food product of claim 7, further comprising a shroud (210) and wheel (205) that is disposed proximate to an inlet of the first conveyor, the wheel engages the endless belt that forms the return conveyor and the first conveyor and redirects the endless belt arriving to the wheel from the return conveyor to establish the inlet of the first conveyor, wherein the shroud surrounds a portion of the return conveyor and the wheel, wherein the shroud collects granular food that travels with the return conveyor and interaction between the belt and the collected granular food within the shroud causes granular food to be entrained with the belt through inlet portion of the first conveyor, wherein the entrained granular food upon the belt within the first conveyor contacts food that is deposited upon the first conveyor causing a surface of the food in contact with or in close proximity to the belt along the first conveyor to receive a coating of granular food product thereon.

9. The machine for applying a granular food coating to a food product of claim 8, further comprising a second shroud (470) that is disposed around a position where the looped elevator transitions from the lower return portion below the first conveyor to the upward portion outboard of the first side of the first conveyor, wherein granular food product that falls through the elongate aperture an into engagement with the plurality of plates traveling below the return conveyor travels to the second shroud with the travel of the plurality of plates, wherein collected granular food product within the second shroud rests upon the plurality of plates traveling in the vertically upward direction.

10. The machine for applying a granular food coating to a food product of claim 6, further comprising a shroud (470) that is disposed around a position where the looped elevator transitions from the horizontal direction below the first conveyor to the vertically upward direction outboard of the first side of the first conveyor, wherein granular food product that falls through the elongate aperture an into contact with the plurality of plates traveling below the return conveyor travels to the shroud with the travel of the plurality of plates, wherein collected granular food product within the shroud rests upon the plurality of plates traveling in the vertically upward direction.

11. The machine for applying a granular food coating of any one of claims 1-10, wherein the plurality of plates are each fixed with respect to an endless member (404) and disposed with a constant distance between each adjacent plate.

12. The machine for applying granular food coating of claim 11, wherein the endless member is one of a belt or a chain.

13. The machine for applying granular food coating of any one of claims 5-12, further comprising a hopper (800) configured to receive granular food product and continuously or periodically apply the granular food product from the hopper and onto the return conveyor.

14. The machine for applying a granular food coating to a food product of claim 13, wherein the return conveyor is configured to receive granular that falls thereon through the first conveyor and to also receive granular food added to the machine by the hopper, wherein the return conveyor extends to and above a portion of the first conveyor at a transition end of the return conveyor, wherein granular food that is disposed upon the return conveyor reaching the transition end falls off the return conveyor as the return conveyor extends along the transition end and falls onto the first conveyor or a pan disposed below the first conveyor.

15. The machine for applying a granular food coating to a food product of claim 14, wherein movement of the first conveyor away from a position below the transition of the return conveyor urges granular food product toward the inlet of the first conveyor.
